## Europäisches Patentamt
## European Patent Office
## Office européen des brevets

(11) Publication number: **0 074 823**
**B1**

(12) # EUROPEAN PATENT SPECIFICATION

(45) Date of publication of patent specification: **18.03.87**

(21) Application number: **82304785.7**

(22) Date of filing: **10.09.82**

(51) Int. Cl.⁴: **F 23 C 7/00,** F 23 D 11/10, F 23 L 15/04

(54) **Liquid fuel combustion apparatus.**

(30) Priority: **14.09.81 JP 145340/81**
**21.09.81 JP 150331/81**
**21.09.81 JP 150332/81**

(43) Date of publication of application:
**23.03.83 Bulletin 83/12**

(45) Publication of the grant of the patent:
**18.03.87 Bulletin 87/12**

(84) Designated Contracting States:
**DE FR GB NL**

(56) References cited:
DE-A-1 501 840
DE-A-1 750 173
DE-A-3 005 880
FR-A-2 396 242
US-A-1 575 587
US-A-3 649 206
US-A-3 977 823
US-A-4 017 253
US-A-4 060 380
US-A-4 131 514
US-A-4 155 702

(73) Proprietor: **OSAKA GAS CO., LTD**
**1 Hiranomachi 5-chome, Higashi-ku**
**Osaka-shi, Osaka, 541 (JP)**

(72) Inventor: **Shimizu, Shoji**
**1, Hirano-machi 5-chome**
**Higashi-ku Osaka (JP)**
Inventor: **Mitsudomi, Hiroyuki**
**1, Hirano-machi 5-chome**
**Higashi-ku Osaka (JP)**
Inventor: **Ito, Hirosato**
**1, Hirano-machi 5-chome**
**Higashi-ku Osaka (JP)**

(74) Representative: **Senior, Alan Murray et al**
**J.A. KEMP & CO 14 South Square Gray's Inn**
**London WC1R 5EU (GB)**

(56) References cited:
**US-A-4 174 955**
**US-A-4 192 842**
**US-A-4 255 125**

## Description

The present invention relates to an apparatus for combustion of fuels.

US—A—4017253 describes a combustion apparatus as set out in the prior art portion of claim 1.

While it has been proposed in DE—C—373203 to use an oxygen permselective membrane to provide air to support combustion of a fuel, there also is no consideration of the problems met by the present invention in burning heavy oil wile minimizing production of oxides of nitrogen.

However it has heretofore been difficult to effectuate a satisfactory combustion of liquid fuels, for example heavy oil, having a high degree of viscosity and in addition, containing a large amount of organic nitrogen compunds. It is equally important to provide combustion conditions in which production of nitrogen oxide is minimized. The present invention is directed at providing an apparatus for burning liquid fuels such as heavy oil with satisfactory results, bringing about a solution to such technical problems as mentioned above. US—A—4017253 which is specifically concerned with a fluidized bed container does not contribute to solving such problems.

The present invention is characterized in that an oxygen permselective membrane is provided for oxygen enrichment of the enriched supply of air, in that means for supplying enriched air for support of primary combustion are connected to the inner concentric channel and in that means for supplying non-enriched air for support of secondary combustion are connected to the outer concentric channel.

By burning the fuel with primary combustion in an oxygen-enriched gas a high temperature very efficient combustion is obtained with the amount of nitrogen oxides produced being kept low because of this high temperature combustion taking place in a reducing atmosphere before final combustion with the secondary air.

Preferably the liquid fuel is atomized with gaseous fuel before being burned with the oxygen enriched primary air as it is found that under these conditions even greater advantages are achieved in reducing the formation of nitrogen oxides despite the high temperature flame achieved.

Preferably a heat exchanger is provided for heating the air being passed to the membrane in order to be oxygen-enriched, said heat exchanger being connected to receive hot exhaust gas from the burner. With this arrangement, the air can be very much more highly enriched with oxygen by use of the membrane than if the air had been unheated because the efficiency of the membrane increases with an increase of operating temperature.

A detailed description of the invention will be made with reference to the accompanying drawings wherein like numerals designate corresponding parts in the figures.

Fig. 1 is the diagram of an example of the embodiment of the present invention;

Fig. 2 is an enlarged cross-sectional view of the burner in Fig. 1, showing its structure; and

Fig. 3 is an enlarged cross-sectional view of the burner in another embodiment of the invention.

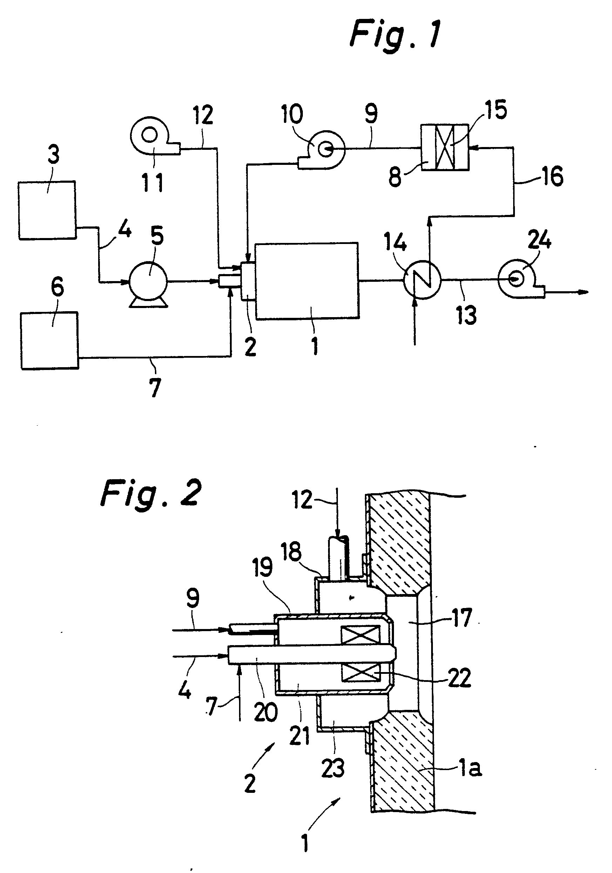

Fig. 1 is the diagram of an example of the embodiment of the present invention. A combustion furnace 1 is provided with a burner 2. This burner 2 is supplied with a liquid fuel, for example, heavy oil, stored in a tank 3, by means of a pump 5 provided midway in a pipe conduit 4. It is also supplied with a gaseous fuel, for example town gas or liquefied natural gas, from a tank 6, through a pipe conduit 7. Further, oxygen-enriched air obtained by an oxygen-enriched air generating means 8 is supplied, as the primary air, to the burner 2 by means of an induction fan 10 provided midway in a pipe conduit 9. Still further, air drawn in from the atmosphere by a force blower 11 is supplied through a pipe conduit 12 to the burner 2, as the secondary air.

In the burner 2, liquid fuel is atomized by gaseous fuel and is burned with the primary and secondary airs. In virtue of such, an efficient combustion, with a reduction in the amount of NOx generated, is realized. Waste gas from the combustion in the burner 2 is exhausted from an outlet of the combustion furnace 1 through an exhaust gas duct 13, induced into it by an induction fan 24 provided at its end. Midway in the exhaust gas duct 13, there is provided a heat exchanger 14 for the purpose of heat exchange between combustion waste gas and air.

The oxygen-enriched air generating means 8 is provided with an oxygen permselective membrane 15 which is made of an ultrathin film of high molecular silicon compound; and this oxygen permselective membrane 15 performs the function of increasing the concentration of oxygen in the air flowing through it to about 23 to 31%. Furthermore, said oxygen permselective membrane 15 is possessed of such a property that the higher the temperature of air flowing through it, the larger becomes the amount of oxygen-enriched air obtained. For instance, when the air temperature is raised from 20°C to 80°C, it is possible to obtain about twice as much oxygen-enriched air with the same concentration of oxygen. Into such oxygen-enriched air generating means 8 as described above, air preheated by the heat exchanger 14 is introduced through a pipe conduit 16. Accordingly, it is possible to obtain a relatively large amount of oxygen-enriched air; and this oxygen-enriched air is introduced into the burner 2 through the pipe conduit 9, by means of the induction fan 10.

Fig. 2 is an enlarged cross-sectional view of the burner 2, showing its structure. At a part of the main body of furnace 1a of the combustion furnace 1, there is formed an opening 17; and at this opening 17, there is installed the burner 2, facing the inside of the combustion furnace 1. The burner 2 comprises an external casing 18 in cylindrical form, with a bottom covering the opening 17, an internal casing 19 in cylindrical form, which is concentrically thrust into the external casing 18 and which has a bottom with an opening toward the opening 17 of the main body of furnace 1a, and a fuel spraying cylinder 20 which is concentrically thrust into the internal casing 19. Between the exterior surface of the fuel spraying cylinder 20 and the interior surface of the internal casing 19, there is formed the primary air channel 21 in annular form; and midway in this primary air channel 21, there is provided a fixed vane 22 on the exterior surface of the fuel spraying cylinder 20. Further, between the exterior surface of the internal casing 19 and the interior surface of the external casing 18, there is formed the secondary air channel 23 in annular form. The fuel spraying cylinder 20 is a two fluid sprayer; and it can be either of the so-called "inside mixing type" or of the "outside mixing type".

To the fuel spraying cylinder 20 are connected a pipe conduit 4 for supply of liquid fuel and a pipe conduit 7 for supply of gaseous fuel. Further, to the internal casing 19 is connected a pipe conduit 9 for supply of oxygen-enriched air to the primary air channel 21; and to the external casing 18 is connected a pipe coduit 12 for supply of air which is not oxygen-enriched to the secondary air channel 23.

Into the burner 2 as described above, liquid fuel is jetted by the fuel spraying cylinder 20, as it is atomized by gaseous fuel. The mixture of atomized liquid fuel and gaseous fuel burns firstly with the primary air which is enriched with oxygen. For this reason, the combustion goes on in an atmosphere having a relatively high concentration of oxygen in its initial stage, hence the efficiency of combustion is improved. Accordingly, high-temperature flames are formed and, in proportion, the luminous flame radiation increases, thus bringing about an improvement in the thermal efficiency of the combustion furnace 1.

There is, on the other hand, a possibility of the formation of high-temperature flames giving rise to an increase of the amount of NOx generated. However, as the result of experiments carried out by the inventor, it was found out that, where the liquid fuel used is heavy oil, when the amount of gaseous fuel supplied is set at 10 to 40%, in terms of calories, of the total amount of combustibles, a reduction in the amount of NOx generated can be realized. When, moreover, the amount of gaseous fuel supplies is set as above, there is brought about an improvement in the brightness of flames and the thermal efficiency is further enhanced.

As for the combustion furnace 1, with an improvement in the burning condition of fuel by virtue of the burner 2, the combustion chamber load is increased; therefore, its size, as a whole, can be made smaller. Where, moreover, the combustion furnace 1 is equipped with an apparatus for desulfurization and/or denitration, the reduction in the amount of combustion gas exhausted, in virtue of oxygen-enriched air used in the burner 2, serves to alleviate the load on such an equipment.

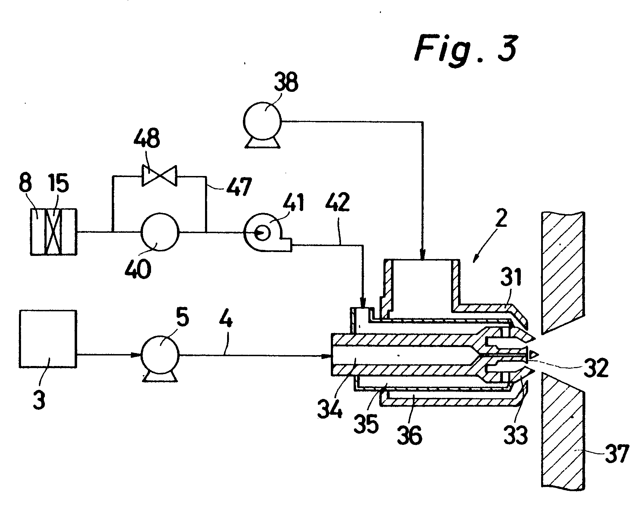

Fig. 3 is an enlarged cross-sectional view of the burner 2 in another exemplary embodiment of the present invention. In the main body 31 of this burner 2, there are formed, by a spray nozzle 32 and an air nozzle 33, three channels, viz., the first channel 34, the second channel 35 and the third channel 36, concentrically disposed in the order mentioned from inside outward in the radial direction. In front of the main body 31, there are provided burner tile 37 (at right in the figure). Into the first channel 34, the innermost in the radial direction, is supplied liquid fuel. Into the third channel 36, radially the outermost, is supplied air by means of a force can 38. Into the second channel 35 is supplied, through a pipe conduit 42, an air of which the oxygen concentration has been made higher by the oxygen permselective membrane 15, by means of a vacuum pump 40 and a blower 41.

The vacuum pump 40 sucks air from the oxygen permselective membrane 15 at, for instance, −600 mmHg and supplies the blower 41 with oxygen-enriched air at about the atmospheric pressure. The oxygen permselective membrane 15 has such a property that, as soon as there begins the transmission of air through it, there immediately takes place polarization of a hard-to-permeate gas on the surface of membrane, hampering separation of oxygen from air. To prevent such, it is essential that new air be constantly supplied to the surface of membrane. The use of the vacuum pump 40 which induces air to permeate the oxygen permselective membrane 15 ensures the flow of necessary amount of air through the membrane, offering a great advantage in respect of savings in energy. For the purpose of prevention of occurrence of pulsation in the flow of gas from the vacuum pump 40, there is provided the blower 41; and this ensures the supply of oxygen-enriched air through the pipe conduit 42 at a certain fixed rate of flow. The flow rate of oxygen-enriched air can be controlled by a flowrate control valve 48 provided midway in a bypass 47 of the pipe conduit 42 connecting the vacuum pump 40 with the oxygen-enriched air generating means 8 and the burner 2.

Oxygen-enriched air passes through the second channel 35; and, at the end of the main body 31 of the burner 2, it atomizes liquid fuel from the first channel 34. Liquid fuel thus atomized mixes with oxygen-enriched air; hence a combustion at very high temperature can be realized.

**Claims**

1. A combustion apparatus for burning liquid fuel in which a liquid atomizing burner are connected comprises a central channel (20; 34) connected to be supplied with liquid fuel and two concentric air supply channels (21, 23; 35, 36) connected to be supplied with air to support combustion, means being provided for supplying oxygen enriched air to one air supply channel (21;

35) and non-enriched air to the other air supply channel (23, 36), characterised in that an oxygen permselective membrane (15) is provided for oxygen enrichment of the enriched supply of air, in that means for supplying enriched air for support of primary combustion are connected to the inner concentric channel (21; 35) and in that means (1) for supplying non-enriched air for support of secondary combustion are connected to the outer concentric channel (23; 36).

2. A combustion apparatus as claimed in claim 1, characterised in that the burner (2) includes means (7) for atomizing the liquid fuels with gaseous fuel.

3. A combustion apparatus as claimed in claim 1 or 2, characterised in that a heat exchanger (14) is provided for heating air being passed to the membrane (15) in order to be oxygen-enriched, said heat exchanger being connected to receive hot exhaust gas from the burner (2).

4. A combustion apparatus as claimed in claim 2 or 3 characterised in that the burner (2) is adapted to be installed in an opening in a combustion chamber and comprises an external casing (18) having a peripheral wall; an internal casing (19) having a peripheral wall and an outer end wall closing said peripheral wall, said internal casing (19) being positioned within said external casing (18) and defining therewith said outer channel (23); and a fuel spraying cylinder (20) extending through said outer end wall and positioned within said internal casing (19) and defining therewith said inner channel (21); means (4) for supplying liquid fuel into said fuel spraying cylinder (20) and a fixed vane (22) being provided on the exterior of said fuel spraying cylinder (20).

**Patentansprüche**

1. Verbrennungsvorrichtung zum Verbrennen flüssigen Brennstoffes, in welcher ein Zerstäubungsbrenner (2) für den flüssigen Brennstoff einen zentralen Kanal (20; 34) zur Zufuhr des flüssigen Brennstoffes und zwei konzentrische Luftzufuhrkanäle (21, 23; 35, 36) aufweist, die zur Zufuhr von Luft zur Unterstützung der Verbrennung vorgesehen sind, wobei zur Zufuhr von mit Sauerstoff angereicherter Luft zu einem Luftzufuhrkanal (21; 35) und von nicht angereicherter Luft zu dem anderen Luftzufuhrkanal (23; 36) Einrichtungen vorgesehen sind, dadurch gekennzeichnet, dass eine für Sauerstoff durchlässige Membrane (15) zur Sauerstoffanreicherung der angereicherten Luftzufuhr vorgesehen ist, dass Einrichtungen zur Zufuhr angereicherter Luft vorgesehen sind, die zur Unterstützung der primären Verbrennung dienen und die mit dem inneren konzentrischen Kanal (21; 35) verbunden sind, und dass Einrichtungen zur Zufuhr nicht angereicherter Luft zur Unterstützung der sekundären Verbrennung mit dem äusseren konzentrischen Kanal (23; 36) verbunden sind.

2. Vorrichtung nach Anspruch 1, dadurch gekennzeichnet, dass der Brenner (2) eine Einrichtung (7) aufweist, die zum Zerstäuben des flüssigen Brennstoffes mit gasförmigem Brennstoff vorgesehen ist.

3. Vorrichtung nach Anspruch 1 oder 2, dadurch gekennzeichnet, dass ein Wärmetauscher (14) vorgesehen ist, der zum Erhitzen von zur Membrane (15) geleiteter, mit Sauerstoff anzureichernder Luft dient, wobei der Wärmetauscher zur Aufnahme heissen Verbrennungsgases vom Brenner (2) angeschlossen ist.

4. Vorrichtung nach Anspruch 2 oder 3, dadurch gekennzeichnet dass der Brenner (2) zur Installation in einer Öffnung in einer Verbrennungskammer vorgesehen ist und ein Aussengehäuse (18) mit einer Umfangswand, ein Innengehäuse (19) mit einer Umfangswand, und eine äussere Endwand zum Abschluss der Umfangswand aufweist, wobei das Innengehäuse (19) innerhalb des Aussengehäuses (18) angeordnet ist und den äusseren Kanal (23) festlegt, und wobei sich ein Zylinder (20) zum Versprühen von Brennstoff durch die äussere Endwand hindurcherstreckt, der innerhalb des Innengehäuses (19) angeordnet ist und den inneren Kanal (21) festlegt, und dass eine Einrichtung (4) zur Zufuhr von flüssigem Brennstoff in den Brennstoffversprühzylinder (20) und ein fester Flügel (22) vorgesehen ist, der an der Aussenseite des Brennstoffversprühzylinder (20) vorgesehen ist.

**Revendications**

1. Appareil de combustion pour brûler un combustible liquide, dans lequel un brûleur d'atomisation du liquide (2) comporte un conduit central (20; 34) monté de façon à être alimenté en combustible liquide et deux conduits d'arrivée d'air concentriques (21, 23; 35, 36) montés pour être alimentés en air pour entretenir la combustion, des moyens étant prévus pour amener de l'air enrichi en oxygène dans un conduit d'alimentation en air (21; 35) et de l'air non enrichi dans l'autre conduit d'alimentation en air (23; 36), caractérisé en ce qu'il est prévu une membrane à perméabilité sélective vis-à-vis de l'oxygène (15) pour enrichir en oxygène l'air d'alimentation, que des moyens pour amener l'air enrichi pour entretenir la combustion primaire sont raccordés au conduit concentrique intérieur (21; 35) et en ce que des moyens pour amener l'air non enrichi pour entretenir la combustion secondaire sont raccordés au conduit concentrique extérieur (23; 36).

2. Appareil de combustion selon la revendication 1, caractérisé en ce que le brûleur (2) comporte des moyens (7) pour atomiser le combustible liquide par le combustible gazeux.

3. Appareil de combustion selon la revendication 1 ou 2, caractérisé en ce qu'un échangeur thermique (14) est prévu pour chauffer l'air amené à la membrane (15) pour être enrichi en oxygène, cet échangeur thermique étant monté pour recevoir les gaz brûlés chauds en provenance du brûleur (2).

4. Appareil de combustion selon la revendication 2 ou la revendication 3, caractérisé en ce que le brûleur (2) est adapté pour être installé dans une ouverture dans une chambre de combustion et comprend un carter extérieur (18) ayant une paroi périphérique, un carter intérieur (19) ayant une paroi périphérique et une paroi terminale extérieure fermant cette paroi périphérique, le carter intérieur (19) étant disposé à l'intérieur du carter extérieur (18) et définissant avec celui-ci le conduit extérieur (23); et un cylindre de pulvérisation de combustible (20) s'étendant à travers la paroi terminale extérieure, disposé à l'intérieur du carter intérieur (19) et définissant avec celui-ci la conduit intérieur (21); des moyens (4) pour amener le combustible liquide dans le cylindre de pulvérisation de combustible (20), et un aubage fixe (22) monté sur l'extérieur de ce cylindre de pulvérisation de combustible (20).

0 074 823

# Fig. 1

# Fig. 2

Fig. 3